# FASCICULE DE BREVET EUROPEEN

(11) **EP 1 903 855 B1**
(45) Date de publication et mention de la délivrance du brevet: **29.08.2012**
(21) Numéro de dépôt: 06779038.6
(22) Date de dépôt: 10.07.2006
(51) Int. Cl.: A01G 23/093

(54) **DISPOSITIF D'ELAGAGE ET DE BROYAGE DE LA VEGETATION**
VORRICHTUNG ZUM BESCHNEIDEN UND ZERKLEINERN VON PFLANZEN
DEVICE FOR PRUNING AND SHREDDING PLANTS

(30) Priorité: 11.07.2005 FR 0552142; 05.08.2005 FR 0552447; 31.08.2005 FR 0552618
(43) Date de publication de la demande: 02.04.2008
(73) Titulaire: Bon, Alain Guy George, 08210 Euilly et Lombut (FR)
(72) Inventeur: Bon, Alain Guy George, 08210 Euilly et Lombut (FR)
(74) Mandataire: Rhein, Alain
(86) Numéro de dépôt international: PCT/FR2006/050701
(87) Numéro de publication internationale: WO 2007/007005

(56) Documents cités:
- FR-A- 2 530 924
- US-A- 5 305 972
- US-A- 5 794 866

## Description

La présente invention a pour objet un dispositif d'élagage et de broyage de la végétation.

L'entretien des abords des routes et chemins forestiers ou autres, nécessite de régulières opérations d'élagage, qui elles-mêmes génèrent des opérations de broyage de la végétation pour permettre l'enlèvement et le transport des déchets obtenus.

Les opérations d'élagages sont de manière générale réalisées au moyen de scies tronçonneuses ou analogues, portées manuellement ou montées sur des engins tracteurs, tandis que le broyage intervient ultérieurement au moyen de broyeurs à végétaux.

On utilise également des outils de coupe manuels traditionnels, ou bien des débroussailleuses, lesquelles sont toutefois inefficaces dès que les branches dépassent une certaine section.

L'élagage est une opération lente, et lorsqu'il s'agit de traiter des haies hautes ou des arbres en bordure de voies de circulation, cela peut entraîner des ralentissements de la circulation.

En outre, le broyage étant une opération indépendante de celle de l'élagage, cela accroît les inconvénients précités.

La présente invention a pour but de remédier à ces divers inconvénients en proposant un dispositif d'élagage et de broyage de la végétation, permettant non seulement de réaliser ces deux opérations simultanément, mais également de les réaliser à une cadence encore jamais atteinte à ce jour.

Le document US-A-5 794 866 décrit un dispositif combinant l'élogage et le broyage, conforme au préambule de la revendication 1.

Le dispositif d'élagage et de broyage de la végétation selon l'invention comporte une tête de broyage disposée à l'extrémité d'un bras orientable lui-même porté par un engin tracteur apte à se déplacer le long de la végétation à traiter, ladite tête comporte un carter comprenant deux flasques parallèles entre lesquels sont montés deux rotors juxtaposés d'axes parallèles, équipés de couteaux radiaux et aptes à être entraînés en rotation dans des sens inverses, en sorte que les couteaux desdits rotors évoluent dans l'espace qui sépare lesdits rotors et y entraînent la végétation en vue de la couper et de la broyer.

Selon une caractéristique additionnelle du dispositif d'élagage et de broyage selon l'invention, l'un des deux flasques, celui destiné à être placé au plus près de la végétation, est largement échancré.

Selon une autre caractéristique additionnelle du dispositif d'élagage et de broyage selon l'invention, l'un des flasques, celui destiné à être placé le plus loin de la végétation, est prolongé d'un déflecteur apte à contenir et guider ladite végétation vers les rotors.

Selon une autre caractéristique additionnelle du dispositif d'élagage et de broyage selon l'invention, les rotors comprennent chacun un corps se présentant sous la forme d'un cylindre de relativement grand diamètre duquel font saillie les couteaux.

Selon une autre caractéristique additionnelle du dispositif d'élagage et de broyage selon l'invention, au moins l'un des rotors est associé à des contre-couteaux disposés au niveau d'un flasque à l'entrée de l'espace qui sépare lesdits rotors.

Selon une autre caractéristique additionnelle du dispositif d'élagage et de broyage selon l'invention, il comporte des contre-couteaux disposés au droit de l'espace qui sépare les rotors, et qui présentent chacun un bord actif, qui de préférence est confondu avec à l'axe passant par les deux axes des rotors, en sorte d'être parallèle aux couteaux 15 lorsque ceux-ci croisent lesdits contre couteaux.

Selon une autre caractéristique additionnelle du dispositif d'élagage et de broyage selon l'invention, il comporte un racleur disposé au droit de l'espace qui sépare les rotors, prévu mobile en pivotement selon un axe parallèle à ceux des rotors, en sorte de pouvoir prendre plusieurs positions entre deux positions extrêmes qui correspondent pour l'une au raclement d'un rotor et pour l'autre au raclement de l'autre rotor.

Selon une autre caractéristique additionnelle du dispositif d'élagage et de broyage selon l'invention, il est muni de moyens racleurs solidaires du carter, se présentant sous la forme de peignes entre les dents desquels passent les couteaux.

Selon une autre caractéristique additionnelle du dispositif d'élagage et de broyage selon l'invention, le carter comporte intérieurement des moyens aptes à ralentir la progression de la matière végétale après son passage dans l'espace qui sépare les rotors.

Selon une autre caractéristique additionnelle du dispositif d'élagage et de broyage selon l'invention, le carter comporte des ouvertures positionnées en regard de chacun des rotors et destinées à l'évacuation du broyat, lesdites ouvertures étant équipées de moyens déflecteurs aptes à diriger le flux de broyat.

Selon une autre caractéristique additionnelle du dispositif d'élagage et de broyage selon l'invention, le bras orientable est prévu apte à être solidarisé à un engin tracteur, et il est à au moins deux, de préférence au moins trois, degrés de liberté, en sorte de permettre de placer la tête de broyage selon différentes orientations et à différentes hauteurs.

Les avantages et les caractéristiques du dispositif d'élagage et de broyage selon l'invention, ressortiront plus clairement de la description qui suit et qui se rapporte au dessin annexé, lequel en représente un mode de réalisation non limitatif.

Dans le dessin annexé :
- la figure 1 représente une vue schématique de côté d'une partie du dispositif d'élagage et de broyage de la végétation selon l'invention.
- la figure 2 représente une vue schématique sous un autre angle du même dispositif.
- la figure 3 représente une vue schématique en perspective du même dispositif.
- la figure 4 représente une vue une vue schématique de côté d'une variante d'une partie du même dispositif.
- la figure 5 représente une vue schématique partielle en perspective d'un élément du même dispositif.

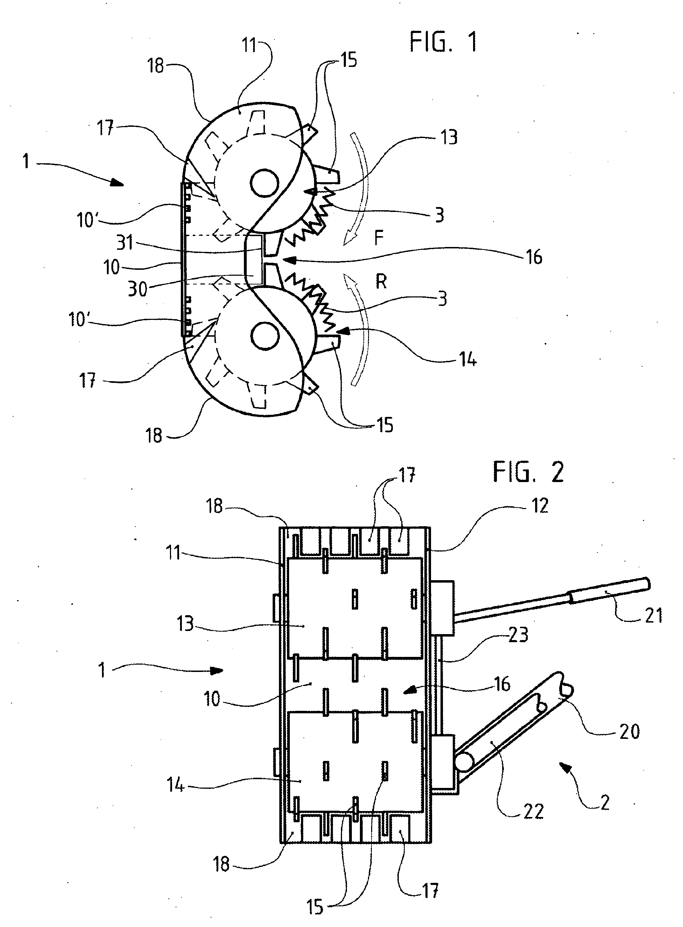

En référence à ces figures on peut voir qu'un dispositif d'élagage et de broyage de la végétation selon l'invention comprend une tête 1 montée à l'extrémité d'un bras articulé 2, visible sur la figure 2.

La tête 1 comporte un carter 10 comprenant deux flasques 11 et 12 qui enserrent et maintiennent deux rotors 13 et 14 d'axes parallèles qui comprennent chacun un corps cylindre muni de couteaux radiaux 15, représentés schématiquement, et séparés par un espace 16 dans lequel évoluent les couteaux 15.

Les deux rotors 13 et 14 sont entraînés en contre rotation, dans le sens des flèches respectivement F et R, en sorte d'entraîner la végétation dans l'espace 16, et de la propulser dans le carter 10 en vue d'en réaliser le broyage.

Les couteaux 15 sont de préférence régulièrement répartis sur toute la surface des corps des rotors 13 et 14 en sorte de ne pas favoriser les phénomènes de bourrage.

Afin d'accroître la qualité du broyage, le carter 10 est équipé intérieurement de moyens 10' aptes à ralentir la progression de la matière végétale, en sorte d'augmenter la durée de présence de cette dernière dans la zone d'action des couteaux 15.

Ces moyens peuvent par exemple consister en des barres faisant saillie de la face intérieure du carter 10 parallèlement aux axes des rotors 13 et 14, et s'étendant entre les deux flasques 11 et 12.

La tête 1 comporte également des éléments racleurs 17 solidaires du carter 1, et qui s'étendent entre les couteaux 15 pour venir pratiquement au contact des corps des rotors 13 et 14.

La tête 1 présente à chacune de ses extrémités, c'est-à-dire de part et d'autre des rotors 13 et 14, une ouverture 18 permettant l'évacuation du broyat.

On notera qu'il est parfaitement possible d'associer à la tête 1 des moyens de collecte et d'évacuation du broyat.

Le bras articulé. 2, qui en l'occurrence est solidarisé au flasque 12, permet de déplacer la tête 1 par rapport à la végétation, et notamment de manière que le flasque 11 demeure sensiblement parallèle au sens de déplacement et à la végétation. Le bras articulé 2 est à plusieurs degrés de liberté, au moins deux, de préférence trois.

Il est ainsi possible de traiter des parois végétales verticales telles que des haies ou analogues, mais également surfaces horizontales, en déplaçant la tête 1 flasque 11 parallèle au sol.

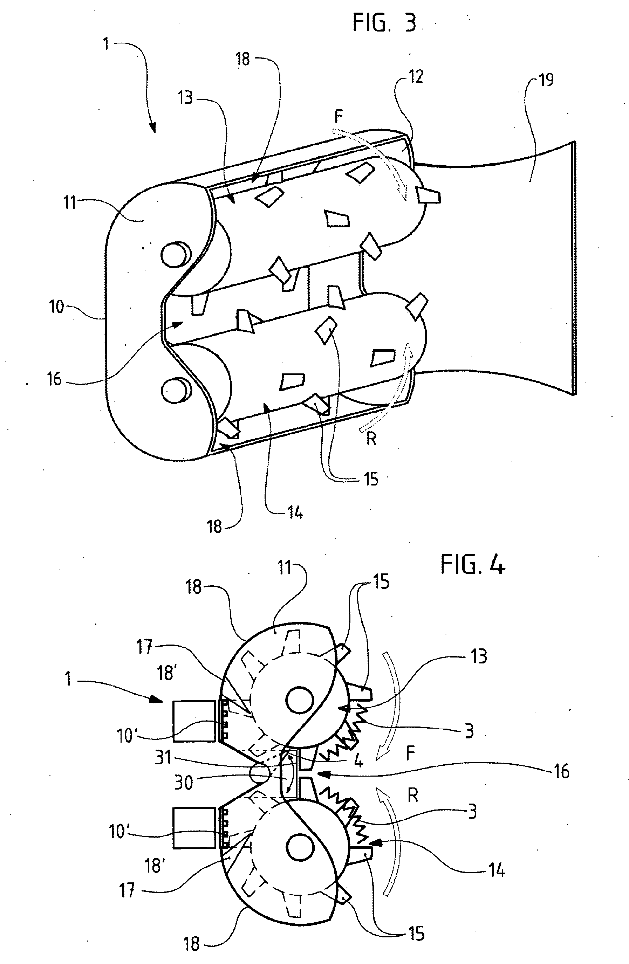

On notera, comme cela est plus particulièrement visible sur la figure 3, que le flasque 11, est largement échancré pour permettre une pénétration accrue dans la végétation, contrairement au flasque 12 permettant ainsi de contenir les projections.

Il est par ailleurs possible d'équiper la tête 1 de contre-couteaux 3, représentés schématiquement sur la figure 1, destinés à faciliter la coupe de la végétation. Ces contre-couteaux 3 peuvent consister en une prolongation du flasque 11 dans la région de l'espace 16, et présentant, pour chacun des rotors 13 et 14, un bord denté concentrique au rotor concerné, et de rayon compris entre celui du corps du rotor et celui des couteaux 15.

On notera qua la tête 1 est également munie, de manière optionnelle, de contre-couteaux 30, visibles sur la figure 1, disposés au droit de l'espace 16, et qui présentent chacun un bord actif 31, qui de préférence est confondu avec à l'axe passant par les deux axes des rotors 13 et 14, en sorte d'être parallèle aux couteaux 15 lorsque ceux-ci croisent les contre couteaux 30.

Sur la figure 3 on peut voir également que le flasque 12 est prolongé vers l'avant, c'est-à-dire du côté duquel émergent les couteaux 15, par un déflecteur 19 apte à contenir et guider la végétation.

Le bras articulé 2 comprend principalement un bras 20 mobile en déplacement pendulaire et solidarisé à la tête 1 en regard du rotor 14, et un vérin 21 dont l'extrémité est solidarisée à la tête 1 en regard du rotor 13, et qui est destiné, au gré de son allongement ou de son raccourcissement, à faire varier l'inclinaison de la tête 1.

Le bras 20 est doublé d'un arbre d'entraînement 22 qui transmet le mouvement au rotor 14, tandis qu'un arbre de transmission 23 permet l'entraînement du rotor 13.

En référence à la figure 4, on peut voir une forme d'exécution différente de la tête 1.

Ainsi, les ouvertures 18, non visibles, destinées à l'évacuation du broyat, sont rapprochée de la région médiane du carter, et débouchent chacune au droit d'un volet 18', lequel est orientable selon un axe perpendiculaire à ceux des rotors 13 et 14. Il est par conséquent possible, par le pivotement des volets 18', d'orienter le flux de broyat.

On notera que les volets peuvent être remplacés par des goulottes, également orientable, qui couvrent chacune une ouverture 18, permettant ainsi de canaliser le flux de broyat.

Par ailleurs, la tête 1 comporte de plus un racleur 4, disposé au droit de l'espace 16, et qui agit entre les contre couteaux 18', ce racleur 4 étant prévu mobile en pivotement selon un axe parallèle à ceux des rotors 13 et 14, en sorte de pouvoir prendre deux positions extrêmes qui correspondent pour l'une au raclement du rotor 13 et pour l'autre au raclement du rotor 14.

On comprendra que ce racleur 4 présente également une fonction de déflecteur, puisque selon la position extrême choisie, la végétation est dirigée vers l'un ou l'autre des rotors 13 et 14. Par contre, en positionnant le racleur 4 entre les deux positions extrêmes, la végétation est dirigée simultanément vers les deux rotors 13 et 14.

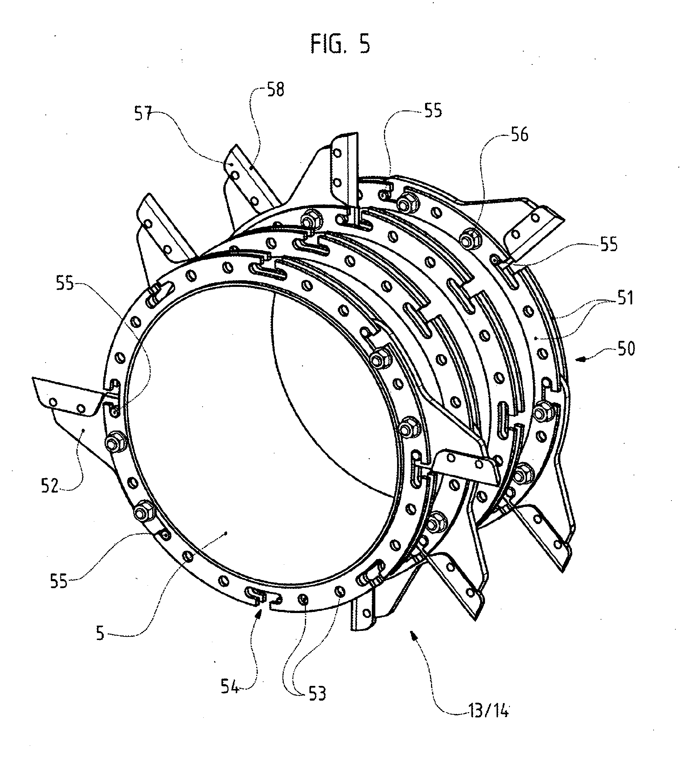

En référence maintenant à la figure 5, on peut voir un rotor 13 ou 14, lequel consiste en un fût 5 muni extérieurement de paires 50 de couronnes 51, destinées à la solidarisation de porte-couteaux 52. Les couronnes 51 sont percées de trous 53 et comporte des échancrures 54, tandis que les porte-couteaux 52 comportent chacun d'une part deux goupilles 55, une à chaque extrémité, et d'autre part des trous, non visibles.

Chaque porte-couteau 52 est introduit entre deux couronnes 51 d'une paire 50, les goupilles 55 sont engagées dans les échancrures 54 et sont destinées à supporter les efforts de cisaillement, la solidarisation étant réalisée au moyen de boulons 56.

On notera que les échancrures 54 sont de forme symétrique, en sorte de permettre la fixation des porte-couteaux 52 dans un sens ou dans l'autre.

Les porte-couteaux 52 sont munis chacun d'une lame 57 qui présente un biseau 58. Comme on peut le voir également sur la figure 5, les biseaux 58 sont orientés vers l'intérieur du rotor, en sorte de maintenir la végétation et ainsi garantir un broyage optimum.

Ainsi, le mode de réalisation qui vient d'être décrit comprend une paire de rotors, alors qu'il est parfaitement possible qu'il en comprenne plusieurs paires.

D'autre part, les deux rotors représentés sont de dimensions identiques, alors que selon l'utilisation à laquelle le dispositif est destiné, les deux rotors peuvent être de diamètres différents afin de favoriser, du côté du rotor le plus grand, une direction de propulsion de la matière végétale.

## Revendications

1. Dispositif d'élagage et de broyage de la végétation **caractérisé en ce qu'**il comporte une tête de broyage (1) disposée à l'extrémité d'un bras orientable (2) lui-même porté par un engin tracteur apte à se déplacer le long de la végétation à traiter, ladite tête comporte un carter (10) comprenant deux flasques parallèles (11, 12), **caractérisé en ce qu'**entre les flasques sont montés deux rotors (13, 14) juxtaposés d'axes parallèles, équipés de couteaux radiaux (15 ; 52, 57) et aptes à être entraînés en rotation dans des sens inverses (F, R), en sorte que les couteaux (15 ; 52, 57) desdits rotors (13, 14) évoluent dans l'espace (16) qui sépare lesdits rotors (13, 14) et y entraînent la végétation en vue de la couper et de la broyer.

2. Dispositif d'élagage et de broyage selon la revendication 1, **caractérisé en ce que** l'un (11) des deux flasques (11, 12), celui destiné à être placé au plus près de la végétation, est largement échancré.

3. Dispositif d'élagage et de broyage selon la revendication 1 ou la revendication 2, **caractérisé en ce que** l'un (12) des flasques (11, 12), celui destiné à être placé le plus loin de la végétation, est prolongé d'un déflecteur (19) apte à contenir et guider ladite végétation vers les rotors (13, 14).

4. Dispositif d'élagage et de broyage selon l'une quelconque des revendications précédentes, **caractérisé en ce que** les rotors (13, 14) comprennent chacun un corps se présentant sous la forme d'un cylindre (5) de relativement grand diamètre duquel font saillie les couteaux (15 ; 52, 57).

5. Dispositif d'élagage et de broyage selon l'une quelconque des revendications précédentes, **caractérisé en ce que** chacun des broyeur (13, ,14) consiste en un fût (5) muni extérieurement de paires (50) de couronnes (51), destinées à la solidarisation de porte-couteaux (52), chacun desquels étant introduit entre deux couronnes (51) d'une paire (50), bloqué au moyens de goupilles et fixé par boulonnage.

6. Dispositif d'élagage et de broyage selon l'une quelconque des revendications précédentes, **caractérisé en ce qu'**il est muni de moyens racleurs (17 ; 4) solidaires du carter (10), se présentant sous la forme de peignes entre les dents desquels passent les couteaux (15, 52, 57).

7. Dispositif d'élagage et de broyage selon l'une quelconque des revendications précédentes, **caractérisé en ce que** le carter (10) comporte intérieurement des moyens (10') aptes à ralentir la progression de la matière végétale après son passage dans l'espace (16) qui sépare les rotors (13, 14).

8. Dispositif d'élagage et de broyage selon la revendication 6, **caractérisé en ce que** les moyens (10') aptes à ralentir la progression de la matière végétale consistent en des barres faisant saillie de la face intérieure du carter (10) parallèlement aux axes des rotors 13 et 14, et s'étendant entre les deux flasques (11, 12).

9. Dispositif d'élagage et de broyage selon l'une quelconque des revendications précédentes, **caractérisé en ce qu'**au moins l'un des rotors (13, 14) est associé à des contre-couteaux (3) disposés au niveau d'un flasque (11) à l'entrée de l'espace (16) qui sépare lesdits rotors (13, 14).

10. Dispositif d'élagage et de broyage selon l'une quelconque des revendications précédentes, **caractérisé en ce qu'**il comporte des contre-couteaux (30) disposés au droit de l'espace (16) qui sépare les rotors (13, 14), et qui présentent chacun un bord actif (31), qui de préférence est confondu avec à l'axe passant par les deux axes desdits rotors (13, 114), en sorte d'être parallèle aux couteaux (15 ; 52, 57) lorsque ceux-ci croisent lesdits contre-couteaux (30).

11. Dispositif d'élagage et de broyage selon l'une quelconque des revendications précédentes, **caractérisé en ce qu'**il comporte un racleur (4) disposé au droit de l'espace (16) qui sépare les rotors (13, 14), prévu mobile en pivotement selon un axe parallèle à ceux des rotors (13, 14), en sorte de pouvoir prendre plusieurs positions entre deux positions extrêmes qui correspondent pour l'une au raclement d'un rotor et pour l'autre au raclement de l'autre rotor.

12. Dispositif d'élagage et de broyage selon l'une quelconque des revendications précédentes, **caractérisé en ce que** le carter (10) comporte des ouvertures (18) positionnées en regard de chacun des rotors (13, 14) et destinées à l'évacuation du broyat, lesdites ouvertures (18) étant équipées de moyens déflecteurs (18') aptes à diriger le flux de broyat.

13. Dispositif d'élagage et de broyage selon l'une quelconque des revendications précédentes, **caractérisé en ce que** le bras orientable (2) est prévu apte à être solidarisé à un engin tracteur, et il est à au moins deux, de préférence au moins trois, degrés de liberté, en sorte de permettre de placer la tête de broyage (1) selon différentes orientations et à différentes hauteurs.

## Claims

1. Device for pruning and shredding plants, **characterised in that** it includes a shredding head (1) arranged at the end of a steerable arm (2) itself borne by a tractor machine capable of moving along the plants to be treated, said head including a housing (10) comprising two parallel end plates (11, 12), **characterised in that** between the end plates are mounted two juxtaposed rotors (13, 14) with parallel axes, equipped with radial blades (15 ; 52, 57) and capable of being driven in rotation in opposite directions (F, R), so that the blades (15; 52, 57) of said rotors (13, 14) move in the space (16), which separates said rotors (13, 14) and drive therein the plants with a view to their cutting and shredding.

2. Device for pruning and shredding according to claim 1, **characterised in that** one (11) of the two end plates (11, 12), the one aimed at being placed closest to the plants, is largely indented.

3. Device for pruning and shredding according to claim 1 or claim 2, **characterised in that** one (12) of the end plates (11, 12), the one aimed at being placed farthest away from the plants, is extended with a deflector (19) capable of containing and guiding said plants towards the rotors (13, 14).

4. Device for pruning and shredding according to any of the preceding claims, **characterised in that** the rotors (13, 14) each comprise a body in the form of a relatively large-diameter cylinder (5) from which the blades (15 ; 52, 57) protrude.

5. Device for pruning and shredding according to any of the preceding claims, **characterised in that** each of the shredders (13, 14) consists of a barrel (5) externally provided with pairs (50) of crowns (51), aimed at making integral blade-holders (52), each of which is inserted between two crowns (51) of a pair (50), locked in place by means of pins and fixed by bolts.

6. Device for pruning and shredding according to any of the preceding claims, **characterised in that** it is provided with scraper means (17 ; 4) integral with the housing (10), in the form of combs between the teeth of which the blades (15, 52, 57) pass.

7. Device for pruning and shredding according to any of the preceding claims, **characterised in that** the housing (10) internally includes means (10') capable of slowing down the progression of the plant material after its passing into the space (16) separating the rotors (13, 14).

8. Device for pruning and shredding according to claim 6, **characterised in that** the means (10') capable of slowing down the progression of the plant material consist of bars protruding out of the inner face of the housing (10) parallel to the axes of the rotors (13) and (14), and extending between the two end plates (11, 12).

9. Device for pruning and shredding according to any of the preceding claims, **characterised in that** at least one of the rotors (13, 14) is associated with counter-blades (3) arranged at the level of an end plate (11) at the inlet of the space (16) separating said rotors (13, 14).

10. Device for pruning and shredding according to any of the preceding claims, **characterised in that** it comprises counter-blades (30) arranged in front of the space (16) separating the rotors (13, 14), and each having an active edge (31), which preferably coincides with the axis passing through the two axes of said rotors (13, 14), so as to be parallel to the blades (15 ; 52, 57) when the latter intersect said counter-blades (30).

11. Device for pruning and of shredding according to any of the preceding claims, **characterised in that** it includes a scraper (4) arranged in front of the space (16) separating the rotors (13, 14), designed so as to pivot according to an axis parallel to those of the rotors (13, 14), so as to be capable of adopting several positions between two end positions, one corresponding to the scraping of a rotor and other to the scraping of the other rotor.

12. Device for pruning and shredding according to any of the preceding claims, **characterised in that** the housing (10) includes openings (18) positioned in front of each rotor (13, 14) and aimed at evacuating the shred, said openings (18) being provided with deflector means (18') capable of directing the flow of shred.

13. Device for pruning and shredding according to any of the preceding claims, **characterised in that** the steerable arm (2) is designed capable of being made integral with a tractor machine, and has at least two, preferably at least three, degrees of freedom, so as to allow placing the shredding head (1) according to various orientations and at various heights.

## Patentansprüche

1. Vorrichtung zum Beschneiden und Zerkleinern von Bewuchs, **dadurch gekennzeichnet, dass** sie einen Zerkleinerungskopf (1) umfasst, der an dem Ende eines verstellbaren Trägerarms (2) angeordnet ist, der selbst von einer Zugmaschine getragen wird, die geeignet ist, um sich entlang des zu behandelnden Bewuchses fortzubewegen, wobei der besagte Kopf ein Gehäuse (10) umfasst, das zwei parallele seitliche Endplatten (11, 12) umfasst, **dadurch gekennzeichnet, dass** zwischen den seitlichen Endplatten zwei nebeneinander gestellte Rotoren (13, 14) mit parallelen Achsen gelagert sind, die mit radialen Messern (15; 52, 57) bestückt sind, und die geeignet sind, um in Drehung in umgekehrte Richtungen (F, R) bewirkt zu werden, auf solche Art und Weise, dass die Messer (15; 52, 57) der besagten Rotoren (13, 14) sich in dem Raum (16), der die besagten Rotoren (13, 14) trennt, bewegen und dort das Pflanzengut mitreißen, um es zu zerschneiden und zu zerkleinern.

2. Vorrichtung zum Beschneiden und Zerkleinern nach Anspruch 1, **dadurch gekennzeichnet, dass** die eine (11) von den beiden seitlichen Endplatten (11, 12), und zwar jene, die vorgesehen ist, um näher an den Bewuchs angebracht zu werden, weitestgehend eingerückt ist.

3. Vorrichtung zum Beschneiden und Zerkleinern nach Anspruch 1 oder Anspruch 2, **dadurch gekennzeichnet**, das die eine (12) von den seitlichen Endplatten (11, 12), und zwar jene, die vorgesehen ist, um am weitesten von dem Bewuchs angebracht zu werden, durch ein Ablenkblech (19) verlängert ist, das geeignet ist, um den besagten Bewuchs (13, 14) zu fassen und in Richtung auf die Rotoren zu führen.

4. Vorrichtung zum Beschneiden und Zerkleinern nach irgendeinem der vorgehenden Ansprüche, **dadurch gekennzeichnet, dass** die Rotoren (13, 14) jeweils einen Körper umfassen, der als ein Zylinder (5) mit relativ großem Durchmesser ausgestaltet ist, aus welchem die Messer (15; 52, 57) herausragen.

5. Vorrichtung zum Beschneiden und Zerkleinern nach irgendeinem der vorgehenden Ansprüche, **dadurch gekennzeichnet, dass** jede der Zerkleinerungseinheiten (13, 14) aus einer Trommel (5) besteht, die äußerlich mit Paaren (50) von Kränzen (51) bestückt ist, welche für die feste Anbringung der Messerhalter (52) vorgesehen sind, wobei jeder davon zwischen zwei Kränze (51) eines Paares (50) eingefügt, mit Hilfe von Anschlagstiften blockiert und durch Verschraubung verbolzt ist.

6. Vorrichtung zum Beschneiden und Zerkleinern nach irgendeinem der vorgehenden Ansprüche, **dadurch gekennzeichnet, dass** sie mit Schabern (17; 4), die starr mit dem Gehäuse (10) verbunden sind, ausgestattet ist, die als Kämme ausgestaltet sind, zwischen deren Zähne die Messer (15, 52, 57) hindurchgehen.

7. Vorrichtung zum Beschneiden und Zerkleinern nach irgendeinem der vorgehenden Ansprüche, **dadurch gekennzeichnet, dass** das Gehäuse (10) innen Mittel (10') umfasst, die geeignet sind, um die Vorwärtsbewegung des pflanzlichen Materials nach seinem Durchgang durch den Raum (16), der die Rotoren (13, 14) trennt, zu verlangsamen.

8. Vorrichtung zum Beschneiden und Zerkleinern nach Anspruch 6, **dadurch gekennzeichnet, dass** die Mittel (10'), die geeignet sind, um die Vorwärtsbewegung des pflanzlichen Materials zu verlangsamen, aus Pinnen bestehen, die von der inneren Seite des Gehäuses (10) parallel zu den Achsen der Rotoren 13 und 14 weg ragen und sich zwischen den beiden seitlichen Endplatten (11, 12) erstrecken.

9. Vorrichtung zum Beschneiden und Zerkleinern nach irgendeinem der vorgehenden Ansprüche, **dadurch gekennzeichnet, dass** zumindest der eine von den Rotoren (13, 14) Gegenmessern (3) zugeordnet ist, die im Bereich der einen seitlichen Endplatte (11) am Eingang des Raums (16), der die besagten Rotoren (13, 14) trennt, angeordnet sind.

10. Vorrichtung zum Beschneiden und Zerkleinern nach irgendeinem der vorgehenden Ansprüche, **dadurch gekennzeichnet, dass** sie Gegenmesser (30) umfasst, die auf der rechten Seite des Raums (16), der die Rotoren (13, 14) trennt, angeordnet sind, und die jeweils einen aktiven Rand (31) aufweisen, der vorzugsweise mit der Achse, die durch die beiden Achsen der Rotoren (13, 114) koaxial ist, derart, um parallel zu den Messern (15; 52, 57) zu sein, wenn diese die besagten Gegenmesser (30) kreuzen.

11. Vorrichtung zum Beschneiden und Zerkleinern nach irgendeinem der vorgehenden Ansprüche, **dadurch gekennzeichnet, dass** sie einen Schaber (4) umfasst, der auf der rechten Seite des Raums (16), der die Rotoren (13, 14) trennt, angeordnet ist, seiend dieser schwenkbar nach einer Achse vorgesehen, die zu jenen der Rotoren (13, 14) parallel ist, derart, um mehrere Positionen zwischen zwei Endstellungen einnehmen zu können, wobei die eine dem Schaben des einen Rotors und die andere dem Schaben des anderen Rotors entsprechen.

12. Vorrichtung zum Beschneiden und Zerkleinern nach irgendeinem der vorgehenden Ansprüche, **dadurch gekennzeichnet, dass** das Gehäuse (10) die Öffnungen (18) umfasst, die jedem der Rotoren (13, 14) gegenüberliegend angeordnet sind und für die Abfuhr des gemahlenen Guts vorgesehen sind, wobei die besagten Öffnungen (18) mit Leitblechen (18') ausgestattet sind, geeignet, um den Strom des gemahlenen Guts zu lenken.

13. Vorrichtung zum Beschneiden und Zerkleinern nach irgendeinem der vorgehenden Ansprüche, **dadurch gekennzeichnet, dass** der verstellbare Trägerarm (2) geeignet vorgesehen ist, um fest an einer Zugmaschine angebracht zu werden, und dass er zumindest zwei, vorzugsweise zumindest drei Freiheitsgrade aufweist, derart, um zu erlauben, den Zerkleinerungskopf (1) nach verschiedenen Orientierungen und auf verschiedenen Höhen zu positionieren.
